# EUROPÄISCHE PATENTSCHRIFT

(11) **EP 3 284 064 B1**
(45) Veröffentlichungstag und Bekanntmachung des Hinweises auf die Patenterteilung: **10.04.2019**
(21) Anmeldenummer: 16709717.9
(22) Anmeldetag: 24.02.2016
(51) Int. Cl.: H04L 29/08, B60R 25/24, B60R 25/20, H04W 12/08, H04W 12/12, G07C 9/00

(54) **SICHERUNG VON ZUGRIFFEN AUF FAHRZEUGE**
SECURING ACCESS TO VEHICLES
SÉCURISATION DES ACCÈS AUX VÉHICULES

(30) Priorität: 13.04.2015 DE 102015105595
(43) Veröffentlichungstag der Anmeldung: 21.02.2018
(73) Patentinhaber: Huf Hülsbeck & Fürst GmbH & Co. KG, 42551 Velbert (DE)
(72) Erfinder: GENNERMANN, Sven, 42551 Velbert (DE)
(74) Vertreter: Zenz Patentanwälte Partnerschaft mbB
(86) Internationale Anmeldenummer: PCT/EP2016/053865
(87) Internationale Veröffentlichungsnummer: WO 2016/165864

(56) Entgegenhaltungen:
- EP-A1- 2 743 868
- US-B1- 8 380 165

## Beschreibung

Die Erfindung betrifft ein Verfahren zur Sicherung von Zugriffsverfahren. Insbesondere betrifft die Erfindung den Bereich der Zugriffe auf Kraftfahrzeuge.

Eine Berechtigung für den Zugriff auf Kraftfahrzeuge wurde bislang meist über eine Schlüsselkomponente, beispielsweise einen Funkschlüssel oder sogenannten ID-Geber geprüft. Derjenige Benutzer, der den Schlüssel bei sich trägt, ist autorisiert, auf Fahrzeugfunktionen zuzugreifen. Dabei sind Systeme bekannt, die keinen aktiven Entsperr- oder Autorisierungsvorgang erfordern, sogenannte Keyless-Entry-Systeme und Keyless-Go-Systeme.

Es ist außerdem insbesondere aus dem Bereich der Car-Sharing-Konzepte bekannt, dass nach einem Registrierungsvorgang der Zugriff auf Fahrzeuge mit einer Schlüsselkarte oder auch einem Mobiltelefon erfolgen kann.

Im Bereich der privat- oder geschäftlich-genutzten Fahrzeugen mit im Wesentlichen beschränkten Benutzerkreis ist eine Zugriffsmöglichkeiten auf Fahrzeuge über Mobilgeräte ebenfalls bekannt, es bestehen allerdings Vorbehalte hinsichtlich der Sicherheit solcher Konzepte.

Es gibt verschiedene Ansätze, die Berechtigungsinformationen zum Zugriff auf ein Fahrzeug in ein Mobilgerät (beispielsweise ein Smartphone) zu verlagern. Der Eigentümer oder Manager eines Fahrzeuges kann einen Benutzer des Fahrzeuges Rechte einräumen, diese Rechte werden mit einer entsprechenden Applikation und Daten auf einem dem Benutzer zugeordneten Mobiltelefon abrufbar hinterlegt. In der einfachsten Konzeption verfügt dann ein Fahrzeug über eine Steuereinrichtung, die in Kommunikation mit dem Mobiltelefon tritt (beispielsweise über eine Bluetooth der NFC-Verbindung). Bei Zugriff auf das Fahrzeug wird die gespeicherte Legitimation geprüft und in Abhängigkeit davon Zugriff auf das Fahrzeug gewährt.

In fortgeschrittenen Systemen kommunizieren sowohl eine Steuereinheit im Fahrzeug als auch das Mobilgerät mit einer zentralen und gesicherten Plattform, die beispielsweise ein Dienstprovider oder ein Fahrzeughersteller vorhält. Durch diese Vermittlungsposition kann eine höhere Sicherheitsstufe gewährleistet werden.

Es kann außerdem vorgesehen sein, dass der Benutzer eines Mobiltelefons sich gegenüber diesem Mobiltelefon mittels einer Kennung oder biometrischer Daten identifizieren muss, bevor er Zugriff auf die im Mobilgerät gespeicherten Daten und damit auf ein Fahrzeug erhält.

Die vorgenannten Konzepte bieten zwar bezüglich üblicher Angriffe eine robuste Sicherheit, es ist jedoch erstrebenswert, die Sicherheit weiter zu verbessern. So bieten beispielsweise Systeme noch keine umfassende Sicherheit im Falle des Klonens eines Mobilgerätes (Smartphones) durch einen böswilligen Dritten. Es ist grundsätzlich (mit erheblichem Aufwand) möglich, eine exakte Kopie eines Mobilgerätes, insbesondere eines Smartphones anzulegen. Dafür kann zum Beispiel identische Hardware verwendet werden, auf welche ein Software-Systemabbild des geklonten Mobilgerätes aufgespielt wird. Die in der Hardware selbst gespeicherten Kennungen, die grundsätzlich nicht manipulierbar sind da sie hardwareseitig gespeichert sind, können über einen Software-Layer, zum Beispiel unterhalb der Betriebssystemebene abgefangen und manipuliert werden, so dass auch eine identische Hardware sowohl dem Betriebssystem als auch verbundenen Dritten vorgespielt wird. Die Absicherung eines solchen Vorgangs ist in den bisherigen Konzepten noch nicht realisiert.

Aufgabe der Erfindung ist es, eine zusätzliche Sicherheit bei Autorisierungsvorgängen zum Zugriff auf Fahrzeuge bereitzustellen.

Die Aufgabe wird erfindungsgemäß gelöst durch ein Verfahren mit den Merkmalen des Patentanspruchs 1.

Gemäß der Erfindung wird ein Mobilgerät, insbesondere ein Smartphone mit einer darauf laufenden Applikation verwendet, um den Zugriff auf Fahrzeuge im Bereich dieser mobilen Einrichtung zu managen. Ein derart ausgestattetes Smartphone kann sowohl mit einer zentralen Plattform kommunizieren als auch mit einer Sicherheitseinrichtung in einem Fahrzeug. Es ist jedoch auch möglich, dass nur eine Fahrzeugeinheit und das Smartphone ohne zentrale Plattform eingesetzt werden.

Wesentlich ist, dass gemäß der Erfindung das Mobilgerät und die darauf laufende Applikation so ausgebildet sind, dass das Mobilgerät wiederholt Kontakt zu einer entfernten Stelle, z.B. der zentralen Plattform oder auch der Fahrzeugsteuereinrichtung aufnimmt. Die Zeitabstände dieser Kontaktaufnahmen können in einem gewissen Bereich zufällig variiert werden oder auch auf eine feste Periodendauer vorgegeben werden. Beispielsweise können Zeitabstände der Kontaktaufnahme von 10 Minuten oder 60 Minuten oder auch mehreren Stunden vorgesehen sein.

Diese Kontaktaufnahmen erfordern keine Benutzereinwirkung, die beteiligten Geräte erledigen die Kontaktaufnahmen und Abwicklung autonom.

Bei jeder Kontaktaufnahme werden sowohl im Mobilgerät als auch bei entfernten Stellen charakteristische und eindeutige Daten für die jeweilige Kontaktaufnahme gespeichert. Beispielsweise können die charakteristischen Daten in einem Zeitstempel bestehen, welcher die Kontaktaufnahme dokumentiert. Alternativ kann das Mobilgerät von der entfernten Stelle ein kleines Datenpaket mit zufällig generiertem Inhalt übermittelt bekommen. Außerdem wird erfindungsgemäß bei jeder Kontaktaufnahme überprüft, ob die Daten einer vorangehenden Kontaktaufnahme, beispielsweise der unmittelbar vorangehenden Kontaktaufnahme, beidseitig konsistent sind. Es wird also bei jeder Kontaktaufnahme beispielsweise festgestellt, ob auf beiden Seiten der identische Zeitstempel oder Datensatz der vorangehenden Kontaktaufnahme vorhanden ist. Dazu übermittelt das Mobilgerät bei jeder Kontaktaufnahme das in der vorangehenden Kontaktaufnahme übermittelte Datenpaket zurück an die entfernte Stelle, die dort einen Vergleich mit dem vorangehend übermittelten Datenpaket durchführt.

Wird bei dieser Kontrolle eine Inkonsistenz festgestellt, so kann darauf reagiert werden, indem der Zugriff auf ein Fahrzeug von diesem Mobilgerät aus gesperrt wird. Dazu wird eine Sperrung in der entfernten Stelle veranlasst, also in der zentralen Plattform und/oder unmittelbar in der Steuereinheit des Fahrzeugs.

Ein wesentliches Merkmal der Erfindung besteht also darin, in vorgegebenen zeitlichen Abständen eine Auffrischung und Synchronisation von Daten zwischen im Mobilgerät und Steuereinheit im Fahrzeug oder der zentralen Steuerplattform vorzusehen und automatisiert abzuwickeln. Dies schützt davor, dass ein geklontes Mobilgerät unter Vorspielung einer falschen Identität betrieben werden kann. Der wiederholte Synchronisationsvorgang kann problemlos durch eine Applikation auf dem Mobilgerät initiiert werden. Das Synchronisationsintervall kann und sollte in gewissen Grenzen zufällig variiert werden, um eine Systematik und Berechenbarkeit der Kontaktaufnahmen zu reduzieren.

Greifen beispielswiese zwei Geräte, ein legitimes und ein unberechtigter Geräteklon, gemäß diesem erfindungsgemäßen Synchronisierungsvorgang auf die entfernte Stelle, z.B. die zentrale Plattform zu, so sind die Daten nicht konsistent, da bei jeder Kontaktaufnahme eine neue Synchronisierungsinformation auf beiden Seiten hinterlegt wird. Beim ersten Zugriff eines anderen Gerätes würde festgestellt, dass die Synchronisierungsdaten des vorangehenden Kontaktes nicht konsistent sind und eine Sperrung des Zugriffes auf ein Fahrzeug kann veranlasst werden.

Wird ein geklontes Mobilgerät erst nach dem Kopiervorgang und mit erheblicher Zeitverzögerung in Betrieb genommen, hat inzwischen bereits das Originalgerät neue Synchronisierungsinformationen empfangen und an der entfernten Stelle sind ebenfalls die Synchronisierungsinformation aktualisiert worden.

Beim ersten Synchronisierungsversuch des illegalen Klons würde festgestellt, dass die Synchronisierungsinformationen nicht übereinstimmen und der Zugriff auf das Fahrzeug würde gesperrt.

Erfindungsgemäß ist also das zentrale Element des Verfahrens der Vorgang der wiederholten Sicherheitssynchronisierung zwischen dem Mobilgerät und einer entfernten Stelle und Speicherung von für den jeweiligen Synchronisationsvorgang charakteristischen und eindeutigen Daten. Bei jedem nachfolgenden Synchronisierungsvorgang werden die Daten aus einem vorangehenden, vorzugsweise dem unmittelbar vorangehenden Synchronisierungsvorgang abgeglichen und ein Zugriff auf ein zentrales System oder ein Fahrzeug wird unterbunden, wenn die abgeglichenen Daten nicht konsistent sind.

Es ist im Rahmen der Erfindung sinnvoll, wenn jeder Synchronisierungsvorgang derart quittiert wird, dass nach einer Übermittlung der Daten eine Kontrolle der gerade übermittelten Daten stattfindet, um eine fehlerhafte Übermittlung und Speicherung auszuschließen. Vorzugsweise wird daher bei jeder Synchronisierung und Übermittlung neuer Synchronisierungsdaten eine wechselseitige Überprüfung der übermittelten und gespeicherten Daten stattfinden. Wird als charakteristische Information beispielsweise ein Zeitstempel verwendet ist es außerdem wichtig, dass die zeitliche Synchronisation der Geräte sichergestellt ist. Einfacher zu realisieren ist es, wenn die vom Mobilgerät entfernte Stelle als Master der Synchronisation ein Datenpaket (beispielsweise den Zeitstempel) an das Mobilgerät übermittelt und dieses Mobilgerät diese Daten als charakteristische Daten der Kontaktaufnahme speichert. In einer nachfolgenden Kommunikation werden diese Daten zurückgeschickt, an der entfernten Stelle geprüft und bei erfolgreicher Prüfung wird ein neues Datenpaket an das Mobilgerät zurückgesendet.

Da die Daten regelmäßig erneuert werden und nicht nach einem Algorithmus auf dem Mobiltelefon erzeugt werden, entzieht sich eine solche Maßnahme der Kopie eines Mobilgerätes. Es würde erkannt, wenn mehrere Geräte mit vorgetäuschter Identität auf dieselbe entfernte Stelle zugreifen würden.

Vorzugsweise wird die Erfindung in einem System eingesetzt, wo eine zentrale rechte Verwaltungsstelle die Zugriffsrechte zwischen Mobilgeräten und Fahrzeugen koordiniert. Bei solchen Systemen verifiziert beispielsweise die zentrale Stelle die Identität eines Benutzers. Es ist bei derartigen Systemen oft vorgesehen, dass eine vertrauenswürdige Stelle, zum Beispiel der Fahrzeughändler, die Eintragung in der zentralen Datenbank vornimmt und von diesen zentralen Eintragungen sowohl die Fahrzeugeinheit am Fahrzeug selbst als auch das Mobilgerät abhängig sind. In einem solchen Fall würde die Synchronisierung vorzugsweise zwischen Mobilgerät und der zentralen Stelle stattfinden, wobei Mobilgerät und zentrale Stelle über eine drahtlose Datenleitung verbindbar sind. Da jedes Synchronisierungsereignis nur sehr kleine Datenmengen austauscht, ist ein solches System ohne wesentliche Belastung des Datenverkehrs oder des Betriebs des Mobilgerätes möglich. Die Art des Datenaustausches ist weitgehend beliebig, es kann sich beispielsweise um Datennachrichten über ein Datennetzwerk handeln, beispielsweise Aufrufe von gesicherten Internetseiten oder ein Datenaustausch über proprietäre Protokolle.

Sobald die zentrale Plattform feststellt, dass übermittelte Synchronisierungsinformationen nicht konsistent sind, sperrt sie die entsprechenden Privilegien des zugeordneten Geräts und teilt dies einer Fahrzeugeinheit mit, die ebenfalls in Kontakt der zentralen Plattform steht.

Die Sperrung eines solchen Systems wird dem Benutzer in geeigneter Weise mitgeteilt, beispielsweise durch einen Anruf oder Zusendung einer entsprechenden Mitteilung. Es besteht danach die Möglichkeit, die Sperrung durch Nachweis einer geeigneten Legitimation oder Anmeldung eines anderen Mobilgerätes aufzuheben.

Auch wenn ein Benutzer veranlasst wird sein Mobilgerät zurückzusetzen oder eine ältere Sicherung des Mobilgerätes wieder aufzuspielen, kann ein solcher Vorgang erforderlich sein, da dann auch die gespeicherten Synchronisierungsinformationen verloren sind.

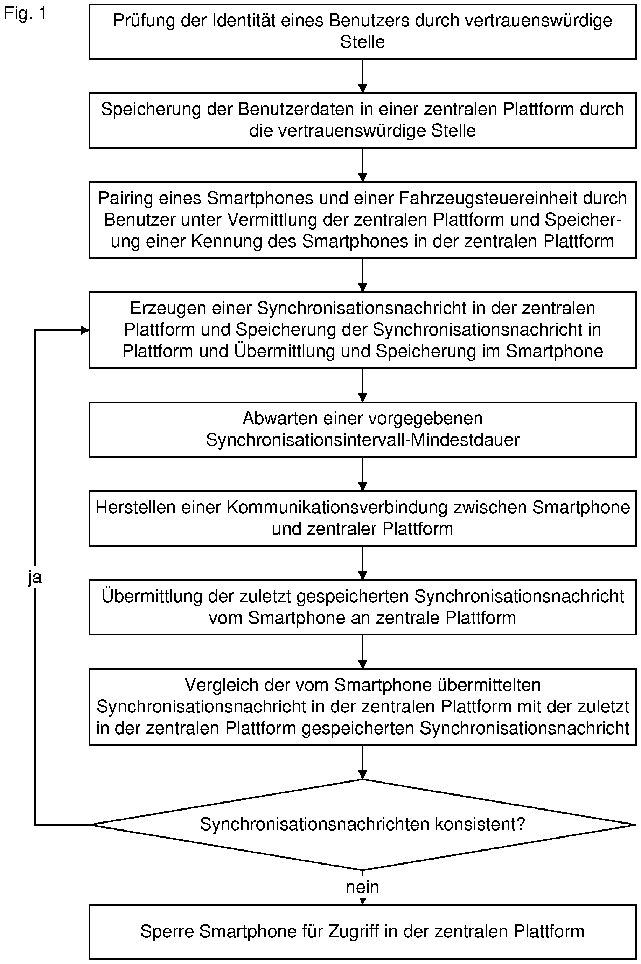

Der Ablauf einer Ausführungsform des Verfahrens ist beispielhaft in der beiliegenden Zeichnung dargestellt.

## Patentansprüche

1. Verfahren zum Sichern eines Zugriffsverfahrens für Fahrzeuge, wobei das Zugriffsverfahren wenigstens ein Mobilgerät und eine entfernte Steuereinrichtung zur Verwaltung der Zugriffsrechte aufweist,
aufweisend die Schritte,
wiederholtes autonomes Verbinden des Mobilgerätes mit der entfernten Steuereinrichtung,
Erzeugen von charakteristischen Neu-Synchronisierungsdaten für jede Verbindung in der entfernten Steuereinrichtung,
übermitteln der Neu-Synchronisierungsdaten von der entfernten Steuereinrichtung an das Mobilgerät
Speichern wenigstens eines Teils der charakteristischen Neu-Synchronisierungsdaten in dem Mobilgerät und der entfernten Steuereinrichtung,
Übermitteln von charakteristischen Alt-Synchronisierungsdaten einer vorangehenden Verbindung von dem Mobilgerät an die entfernte Steuereinrichtung,
Konsistenzprüfung in der entfernten Steuereinrichtung zwischen den vom Mobilgerät empfangenen Alt-Synchronisierungsdaten und den in der entfernten Steuereinrichtung gespeicherten Alt-Synchronisierungsdaten,
- falls die Daten konsistent sind, unterbrechen der Verbindung und Abwarten eines Synchronisierungsintervalls bevor die Verbindung für die nächste Synchronisation wiederhergestellt wird;
- falls die Daten inkonsistent sind, sperren des Mobilgerätes für den weiteren Zugriff auf Fahrzeuge.

2. Verfahren nach einem der vorangehenden Ansprüche, wobei als entfernte Steuereinrichtung eine zentrale Plattform verwendet wird, welche die Zugriffsrechte für eine Vielzahl von Benutzern, Fahrzeugen und zugeordneten Mobilgeräten verwaltet und mit einer Vielzahl von fahrzeugseitigen Fahrzeugsteuereinrichtungen zur Zugriffskontrolle kommuniziert.

## Claims

1. A method for securing an access process for vehicles, the access process having at least one mobile device and a remote control device for managing the access rights,
having the steps:
repeatedly autonomously connecting the mobile device to the remote control device,
generating new characteristic synchronisation data for each connection in the remote control device,
transmitting the new synchronisation data from the remote control device to the mobile device,
storing at least some of the new characteristic synchronisation data in the mobile device and in the remote control device,
transmitting legacy characteristic synchronisation data of a preceding connection from the mobile device to the remote control device,
consistency checking in the remote control device between the legacy synchronisation data received by the mobile device and the legacy synchronisation data stored in the remote control device,
- if the data are consistent, breaking the connection and waiting for a synchronisation interval before the connection is restored for the next synchronisation;
- if the data are inconsistent, blocking the mobile device from further access to vehicles.

2. The method according to any one of the preceding claims, wherein a central platform is used as the remote control device, said central platform managing the access rights for a plurality of users, vehicles and associated mobile devices and communicating with a plurality of vehicle-side vehicle control devices for access control.

## Revendications

1. Méthode de sécurisation d'une procédure d'accès pour des véhicules, la procédure d'accès comportant au moins un appareil mobile et un dispositif de commande distant pour la gestion des droits d'accès, comprenant les étapes de
liaison autonome répétée de l'appareil mobile avec le dispositif de commande distant,
production de nouvelles données de synchronisation caractéristiques pour chaque liaison dans le dispositif de commande distant,
transmission des nouvelles données de synchronisation du dispositif de commande distant à l'appareil mobile, mémorisation d'au moins une partie des nouvelles données de synchronisation dans l'appareil mobile et le dispositif de commande distant,
transmission des anciennes données de synchronisation d'une liaison précédente de l'appareil mobile au dispositif de commande distant,
contrôle de consistance dans le dispositif de commande distant entre les anciennes données de synchronisation reçues par l'appareil mobile et les anciennes données de synchronisation mémorisées dans le dispositif de commande distant,
- au cas où les données sont consistantes, interruption de la liaison et attente d'un intervalle de synchronisation avant que la liaison pour la synchronisation suivante soit rétablie,
- au cas où les données sont inconsistantes, blocage de l'appareil mobile pour l'accès continu à des véhicules.

2. Méthode selon la revendication précédente, une plateforme centrale étant utilisée comme dispositif de commande distant, laquelle gère les droits d'accès pour un grand nombre d'utilisateurs, de véhicules et d'appareils mobiles affectés et communique avec un grand nombre de dispositifs de commande de véhicule côté véhicule pour le contrôle d'accès.
